# EUROPÄISCHE PATENTANMELDUNG

(11) **EP 0 548 717 A1**
(43) Veröffentlichungstag der Anmeldung: **30.06.1993**
(21) Anmeldenummer: 92121208.0
(22) Anmeldetag: 12.12.1992
(51) Int. Cl.: B24B 23/02, B25F 5/00, F16H 57/12, F16C 25/06

(54) **Handwerkzeugmaschine mit Winkelgetriebe**

(30) Priorität: 21.12.1991 DE 4142700
(71) Anmelder: ROBERT BOSCH GMBH, 70442 Stuttgart (DE)
(72) Erfinder: Boeck, Cornelius, W-7022 Leinfelden-Echterdingen (DE); Fuchs, Rudolf, W-7303 Neuhausen (DE)

(57) **Zusammenfassung**

Bei Handwerkzeugmaschinen mit Winkelgetriebe 8 wird das Zahnspiel herkömmlich bei jedem Gerät durch Zwischenlegen von Distanzscheiben individuell eingestellt. Aufgabe der Erfindung ist es, dieses Ziel schnell und ohne Demontage des Gehäuses zu erreichen. Dazu ist das Festlager 11 eines der beteiligten Zahnräder 7 in einem Gewindering 15 aufgenommen, der gegenüber dem Gehäuse 2 verdrehbar ist. Der Gewindering 15 ist aus Kunststoff gefertigt und weist Vertiefungen 18 zum Eingriff eines Stiftes auf.

## Beschreibung

### Stand der Technik

Die Erfindung geht aus von einer Handwerkzeugmaschine nach dem Oberbegriff des Anspruchs 1. Bei derartigen Maschinen wird das Flankenspiel des Winkelgetriebes, insbesondere zwischen dem Motorritzel und einem schrägverzahnten Tellerrad, durch Einlegen von Scheiben passender Stärke zwischen das Festlager und das Gehäuse eingestellt (siehe z. B. EP 261 374). Damit ist der Nachteil verbunden, die Maschine ggf. mehrmals zusammen und wieder auseinander montieren zu müssen, bis die passende Scheibenstärke gefunden ist. Dieser Vorgang ist zeitaufwendig und verteuert die Montage der Getriebe.

### Vorteile der Erfindung

Die erfindungsgemäße Handwerkzeugmaschine mit den kennzeichnenden Merkmalen des Anspruchs 1 hat demgegenüber den Vorteil, daß das Zahnspiel des Winkelgetriebes sich schnell und ohne Demontage des Gehäuses einstellen läßt. Damit wird auf einfache Weise ein geräuscharmer Lauf des Getriebes und eine hohe Lebensdauer erreicht. Wegen der stufenlosen Verstellbarkeit des Festlagers kann zudem die Justierung des Getriebes genauer erfolgen, als dies mit den herkömmlichen Scheiben bestimmter Stärke überhaupt möglich ist.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, wenn der Gewindering zur Einstellung des Zahnspiels direkt an dem Außenring des Festlagers angeformt ist. Insbesondere kann dieser kostengünstig aus Kunststoff gefertigt sein. Vertiefungen am Umfang oder an der Stirnseite des Gewinderings erleichtern das Justieren durch Einstecken von einfachen Stiften. Bei stirnseitiger Anordnung der Vertiefungen kann das Winkelgetriebe auch bei fertigmontiertem Gehäuse noch eingestellt werden.

### Zeichnung

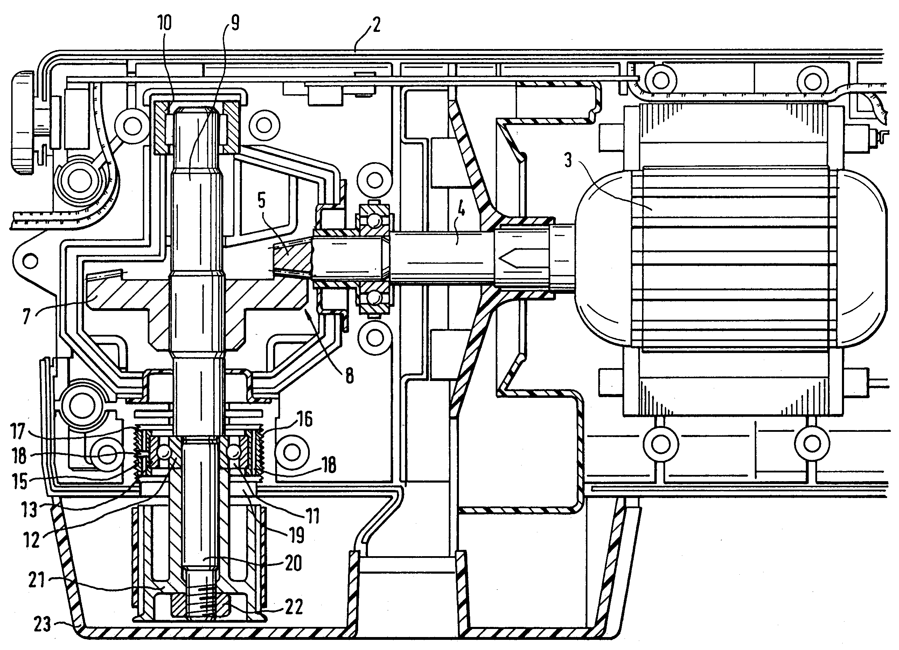

Ein Ausführungsbeispiel der Erfindung ist in der Zeichnung dargestellt und in der nachfolgenden Beschreibung näher erläutert. Die Figur zeigt einen Längsschnitt durch einen Bandschleifer.

### Beschreibung des Ausführungsbeispiels

Ein Bandschleifer weist ein zweischaliges Gehäuse 2 auf, von dem nur eine der Schalen in der Zeichnung sichtbar ist. In dem Gehäuse 2 ist ein Elektromotor 3 untergebracht, der auf seiner im Gehäuse 2 gelagerten Motorwelle 4 ein Kegelritzel 5 aufweist. Mit dem Kegelritzel 5 kämmt ein tellerförmiges Kegelrad 7. Die Zahnräder 5 und 7, deren Achsen rechtwinklig zueinander stehen, bilden ein Winkelgetriebe 8. Das Kegelrad 7 ist fest mit einer Welle 9 verbunden, die mittels eines axial verschieblichen Lagers 10 und eines Festlagers 11 im Gehäuse 2 gehalten ist. Das Festlager 11 wird von einem Kugellager mit auf der Welle festsitzendem Innenring 12 und einem Außenring 13
gebildet. Um den Außenring 13 herum und mit diesem fest verbunden ist ein Gewindering 15, der an seinem Umfang mit einem Gewinde 16 versehen ist. Der Gewindering 15 greift in ein Gewinde 17 ein, das jeweils zur Hälfte in den Gehäuseschalen 2 ausgebildet ist. Der Gewindering 15 weist am Umfang oder an einer seiner Stirnseiten oder auch an beiden Orten Vertiefungen 18 auf, die vorzugsweise hohlzylindrisch sind und zum Einstecken eines einfachen, nicht gezeigten Stiftes dienen.

Am jenseits des Festlagers 11 liegenden Ende 20 der Welle 9 ist als Abtriebsglied eine das Band des Bandschleifers antreibende Rolle 21 aufgesteckt. Die Rolle 21 ist mit einer Gewindemutter 22 fest mit der Welle 9 verbunden. Die Rolle 21 ist von einer aufsteckbaren Gehäusekappe 23 überdeckt. Im Bereich der stirnseitigen Vertiefungen 18 hat das Gehäuse 2 eine erweiterte Öffnung 19 für den Durchtritt der Welle 9 sowie für den Zugang zu den Vertiefungen 18.

Bei der Montage des Bandschleifers wird zunächst der Motor mit Motorwelle 4 und Kegelritzel 5 in die untere, in der Zeichnung gezeigte Gehäuseschale 2 eingelegt. Anschließend wird die Welle 9 mit dem Kegelrad 7, dem Lager 10 und dem Festlager 11 eingelegt. Die Justierung des Flankenspiels der Zahnräder 5 und 7 kann auf zweierlei Weise erfolgen: Entweder wird der Gewindering 15 bei noch nicht aufgelegter zweiter Gehäuseschale von Hand, oder durch Einstecken eines Stiftes in eine der Vertiefungen 18 so weit verdreht, daß das Spiel des Winkelgetriebes 8 einen Wert innerhalb der Toleranzgrenzen annimmt. Oder es kann die zweite Gehäuseschale bereits montiert werden, wobei jedoch die Rolle 21 mit der Welle 9 noch nicht verbunden ist. In diesem Zustand kann durch die Öffnung 19 mit einem Stift in die stirnseitigen Vertiefungen 18 eingegriffen werden und der bereits in beiden Gehäuseschalen 2 gelagerte Gewindering 15 verdreht werden. Erst nach Einstellung des Gewindespiels wird dann die Rolle 21 bzw. bei anderen Handwerkzeugmaschinen ein entsprechendes Abtriebsglied oder Werkzeug mit der Welle 9 verbunden. Schließlich wird zum Schutz vor Verletzungen die Gehäusekappe 23 aufgesetzt.

Die Erfindung beschränkt sich nicht auf das gezeigte Ausführungsbeispiel. Die erfindungsgemäße Spieleinstellung kann auch z. B. bei Winkelschleifern, Exzenterschleifern oder anderen, insbesondere schnellaufenden Handwerkzeugmaschinen Verwendung finden. Die Spieleinstellung kann selbstverständlich auch durch Nachjustieren des Kegelritzels auf der Motorwelle bewerkstelligt werden. Möglich ist beispielsweise auch die Anordnung des Festlagers an dem dem Abtrieb abgewandten Ende der Welle 9.

## Patentansprüche

1. Handwerkzeugmaschine, insbesondere Bandschleifer usw., mit einem vorzugsweise zweischaligen Gehäuse und einem Motor (3) und mit einem Winkelgetriebe mit zwei unter einem Winkel von vorzugsweise 90° stehenden Zahnrädern (5, 7) wie z.B. Kegelrädern oder Schnecke und Schneckenrad, die jeweils in Lagern (10, 11) gehäusefest gelagert sind, dadurch gekennzeichnet, daß das Festlager eines der Zahnräder (7) zur Einstellung des Zahnspiels gegenüber dem Gehäuse (2) einen drehbaren Gewindering (15) aufweist, der in ein Gewinde (16) innerhalb des Gehäuses (2) eingreift und mittels dessen das Festlager axial verstellbar ist.

2. Handwerkzeugmaschine nach Anspruch 1, dadurch gekennzeichnet, daß das Festlager (11) ein Wälzlager ist, an dessen Außenring (13) der Gewindering (15) angeformt, insbesondere angespritzt ist.

3. Handwerkzeugmaschine nach Anspruch 1 oder 2, dadurch gekennzeichnet, daß der Gewindering (15) aus Kunststoff gefertigt ist.

4. Handwerkzeugmaschine nach einem der Ansprüche 1 bis 3, dadurch gekennzeichnet, daß der Gewindering (15) am Umfang Vertiefungen (18) zum Einstecken eines Stiftes zum Verdrehen des Gewindesrings (15) aufweist.

5. Handwerkzeugmaschine nach einem der Ansprüche 1 bis 3, dadurch gekennzeichnet, daß der Gewindering (15) an seiner Stirnseite Vertiefungen (18) zum Einstecken eines Stiftes zum Verdrehen des Gewindesrings (15) aufweist.

6. Handwerkzeugmaschine nach Anspruch 5, dadurch gekennzeichnet, daß das Gehäuse (2) im Bereich des Festlagers eine Öffnung (19) zum Durchgriff eines Stiftes in die Vertiefungen (18) angebracht ist.

7. Handwerkzeugmaschine nach einem der vorhergehenden Ansprüche, dadurch gekennzeichnet, daß das Festlager (11) ein Wellenstück (9) lagert, auf dessen Ende ein Abtriebsglied (21) angeordnet ist, das auch bei bereits geschlossenem Gehäuse (2) noch montierbar ist.
